# EUROPEAN PATENT SPECIFICATION

(11) **EP 3 854 199 B1**
(45) Date of publication and mention of the grant of the patent: **23.08.2023**
(21) Application number: 20214833.4
(22) Date of filing: 17.12.2020
(51) Int. Cl.: A01D 46/30, A01D 91/04

(54) **METHOD FOR IDENTIFYING AND HARVESTING AGRICULTURAL PRODUCTS**
VERFAHREN ZUM IDENTIFIZIEREN UND ERNTEN VON LANDWIRTSCHAFTLICHEN PRODUKTEN
PROCÉDÉ PERMETTANT D'IDENTIFIER ET DE COLLECTER DES PRODUITS AGRICOLES

(30) Priority: 24.01.2020 IT 202000001444
(43) Date of publication of application: 28.07.2021
(73) Proprietor: Zanini, Sergio, 33080 Porcia, Pordenone (IT)
(72) Inventor: Zanini, Sergio, 33080 Porcia, Pordenone (IT)
(74) Representative: Mitola, Marco

(56) References cited:
- JP-A- 2015 202 056
- KR-A- 20040 036 336
- KR-A- 20180 086 745
- US-A1- 2009 231 101
- US-B1- 9 532 508

## Description

### FIELD OF APPLICATION

The present invention is directed to a method for identifying and harvesting agricultural products.

### BACKGROUND ART

As is known, robotized and/or automatic systems are increasingly applied in the modern farming industry for managing production plantations. There are multiple applications covering all steps of production, i.e. from improving the sowing to the cultivation and/or harvesting of the crops. One of the areas which has seen the greatest developments is that related to the automatic harvesting of products in a broad sense, i.e., products such as fruits, flowers, vegetables, and the like.

In particular, two general principles are identified, i.e., non-selective systems and selective systems.

In non-selective systems, harvesting is not tracked but indiscriminate: therefore, such a harvesting ensures, on the one hand, high productivities but, on the other, it can damage both the plant and the product.

One example of non-selective harvesting consists of automatic towed and self-propelled grape harvesting machines, which pick the grapes from the vineyards by means of beating, combing, extraction operations.

In selective systems, instead, harvesting occurs product by product without damaging the plant and preserving the quality of the product, obviously to the detriment of productivity.

One example of selective harvesting consists of robots picking strawberries/peppers in greenhouse cultivations.

Robotized and/or automatic selective systems have some technical limits which slow down the use thereof in a particularly demanding field such as that of agricultural production, such as for example: (a) complexity; (b) poor robustness, in terms of reliability/efficiency, of the product identification systems; (c) low productivity due to the long product recognition and identification times. Furthermore, the wide variety of agricultural products requires a specific calibration/customization for each type of crop so as to ensure sufficient efficiency/reliability of the detection system.

An optimized system, i.e., which ensures a good tracking and harvesting percentage, for strawberries is generally inefficient for harvesting egg-plants because, for the system, the two types of crops have few characteristics in common (color, shape, size...) .

Furthermore, identification systems are quite frequently of the optical type, based on the processing of images, whereby the presence of leaves hinders the operation thereof, both because the leaves may conceal the product and because the leaves and product may have similar colors.

Moreover, there are crops where the various steps of growth of flowers/fruits require rather long periods of time, of the order of months, while the final ripening takes place in a rather short time period, of the order of days or weeks, where it is necessary to pick the products/fruits promptly so as to ensure maximum quality. Such crops require a highly variable labor commitment from the start to the end of production: medium/low in the early steps of growth because the operations can be distributed over a greater period of time, high in the final step where the operations must be carried out within a short period of time.

The automation of final processes must ensure a sufficient speed so as to be economically and qualitatively competitive as compared to the traditional manual systems.

In these cases, the productivity of the system, understood as the number of single products harvested in the unit of time, and the efficiency thereof, understood as the percentage of product effectively harvested with respect to that available on the plant, are both essential characteristics.

For example, a system with high productivity, with thousands of apples harvested per hour, but with 60% efficiency, will leave hundreds of apples on the trees per hour untracked/unharvested, and therefore will require a subsequent manual control. Solutions according to the preamble of claim 1 are disclosed by US 9532508B1.

### PRESENTATION OF THE INVENTION

The need is thus felt to solve the drawbacks and limitations stated above with reference to the prior art.

Such a need is met by a method of identifying and harvesting agricultural products according to claim 1.

### DESCRIPTION OF THE DRAWINGS

Further features and advantages of the present invention will become more comprehensible from the following description of preferred embodiments thereof given by way of non-limiting examples, in which:

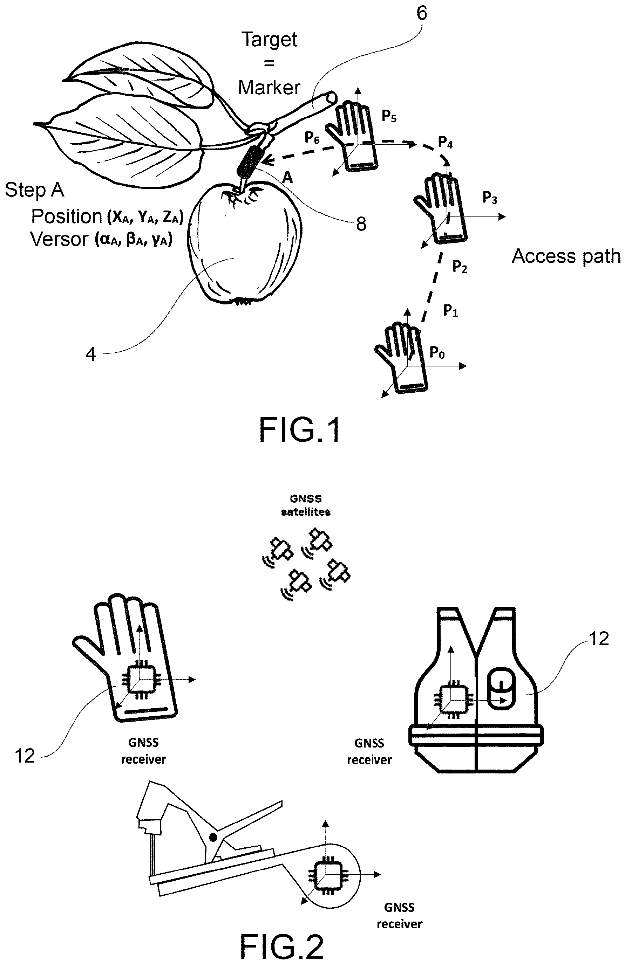

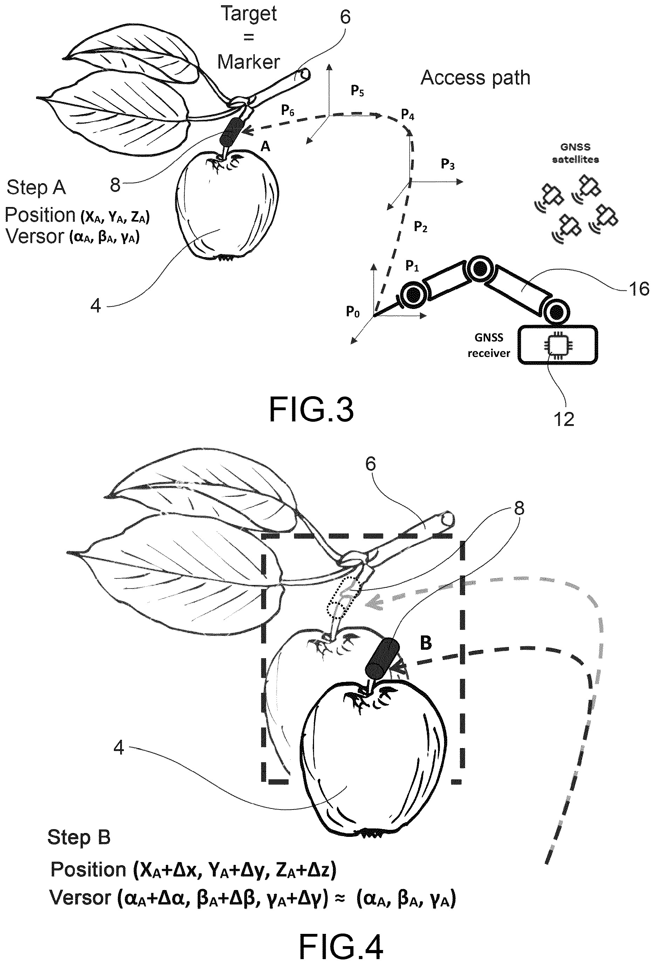

figures 1-4 show diagrammatic views of subsequent steps of identifying and harvesting agricultural products according to an embodiment of the present invention, as described better below.

Elements or parts in common between the embodiments described below will be indicated by the same reference numerals.

### DETAILED DESCRIPTION

With reference to the aforesaid figures, 4 denotes a general agricultural product, whereas 16 denotes a device for harvesting said agricultural product 4.

As mentioned, it is an object of the invention to define a method for improving performance in identifying and harvesting agricultural products 4 both in terms of production, number of agricultural products 4 harvested in the unit of time, and in terms of efficiency, percentage of agricultural product 4 effectively harvested with respect to that available and even in terms of robustness and reliability of recognition of the agricultural product 4, irrespective of the type of product itself and of the respective environmental conditions of the agricultural product 4.

Generally, the natural developing process of the agricultural products consists of a set of steps distributed over a long period of time and which ends with the last step which must often be completed in a short time. The method suggested by the present invention tends to distribute the various steps forming the identification and harvesting process in compliance with the times of the natural developing process of the agricultural products 4.

In fact, the method suggests carrying out preparatory activities during the period of growth and ripening of the agricultural product 4, where the execution time is not critical, and reducing to a minimum, in terms of time, the final harvesting activities.

The ripening process of an agricultural product 4 can be divided into at least two steps: (A) a first set of activities which can be anticipated and aim to prepare the final step; these activities can be distributed throughout the whole period of time preceding the final ripening of the agricultural product 4; (B) the final activity, which must be as quick and efficient as possible to ensure the quality of the harvested agricultural product 4.

The suggested method uses the early period of growth of the agricultural products 4 to identify the position, orientation, and access path thereof of a point of interest 6 of the agricultural product 4. For example, the point of interest 6 of the agricultural product 4 is the petiole which connects the agricultural product 4 to the related plant, from which the agricultural product 4 must be separated in order to be harvested.

The time for carrying out the operations in this step is not a critical factor, therefore it is possible to distribute the work load over a long period of time. Therefore, if the operation is carried out manually, it is not necessary to concentrate a high amount of labor in a short interval. Likewise, if it is carried out automatically, it is not necessary to use particularly fast automatic systems. The activities carried out and the information obtained, stored, and processed will then be used for optimizing and accelerating the final step, where the implementation time is critical instead and therefore must be as short as possible.

The time interval between the first step (A), which consists in identifying the position, orientation, and path to access the point of interest 6 of the agricultural product 4, and the second step (B), for example the harvesting of the agricultural product 4, or the last one in case of several steps, can be any, from a few seconds to days.

The first step A - groups all the preparatory activities; it consists of the steps of: identifying the points of interest 6 of the agricultural products 4, defined as targets, applying a suitable marker 8, detecting and storing the 3 absolute spatial coordinates (XA, YA, ZA) of the marker 8, the 3 directions (angles) which identify the versor (α, β, γ) to access the marker 8, and the coordinates of the points forming the access path for each marker 8. The 3 absolute spatial coordinates (XA, YA, ZA) of the marker 8 can also be obtained, in an equivalent and non-claimed manner, as relative displacement (XAr, YAr, ZAr) with respect to an absolute known point.

The data is stored in an organized structure, referred to as a tracking and access vector, which is associated with the single marker 8. Thereby, a unique connection is obtained between a point of interest 6 of the agricultural product 4, a marker 8, and a corresponding tracking and access vector. The set of all vectors forms a matrix describing the entire plantation.

The detection of the marker 8, the storing of the absolute spatial coordinates of the marker 8, and the creation of the versor to access the marker 8 are carried out by a tracking device 12 which can be of various types, as better described below.

As mentioned above, the operations can be carried out manually, semi-automatically, and/or automatically, and can be distributed over a long period of time.

By way of example, a target can be understood as the fruit cutting point for then carrying out the harvesting operation. In this case, the target is tracked on the point of interest 6, i.e., on the petiole. Other significant points of interest 6 may be identified as the target as a function of the operations to be carried out on the product (e.g., flower pollination). More generally, the target is given by the agricultural product 4 itself (whether it is a flower or fruit).

By way of example, a marker 8 can be understood as a colored small ring so as to be easily identified among the leaves by an optical system. Various solutions of marker 8 based on different physical principles are described in literature: optical, electromagnetic... In any case, such solutions are known and therefore are not the subject of this patent.

The steps of identifying the point of interest 6, applying the marker 8, detecting and storing the spatial coordinates of the marker 8, creating and storing the vector for tracking and accessing the single marker 8 can be carried out in a manual, semi-automatic or automatic mode, as better described below.

Manual mode: the operator manually applies the marker 8 so as to create a unique connection with the point of interest 6 or target. By way of example, it is no longer important whether the fruit is red or yellow, round or cylindrical, because the system will search for the marker 8 having fixed characteristics (such as shape, color, material). By using a convenient tracking device 12, the operator then repeats the movement carried out when applying the marker 8, spatially moves the tracking device 12 which automatically detects and stores, instant by instant, the data needed to reconstruct the path to access the marker 8. For each marker 8, a set of data is generated, a tracking and access vector, containing all the required information.

The tracking device 12 for detecting and storing the tracking and access vector can be understood as a portable device. A possible embodiment is a "virtual scissor" having similar shape and size to the scissor which will be used during the harvesting; the operator simulates the harvesting operation using the "virtual scissor" which records all the movements and positions, the automatic harvesting system will use the stored and processed data to reproduce the operator's behavior while optimizing the times.

The tracking device 12 for detecting and storing the tracking and access vector can be understood as a wearable device, such as a glove or a bracelet worn directly by the operator, for example.

The tracking device 12 for detecting and storing the tracking and access vector can be understood as a device consisting of two elements, a wearable one, such as a backpack, and a movable part connected to the wearable one mechanically or via radio.

The tracking device 12 for detecting and storing the tracking and access vector can be understood as a device consisting of two elements, one applied to a base containing the tracking system, such as a platform on wheels, and a measuring arm mechanically connected to the base.

The tracking device 12 for detecting and storing the tracking and access vector can be understood as a device consisting of two elements, one applied to a base containing the tracking system, such as a platform on wheels, and a portable and/or wearable device connected via radio to the base.

Semi-automatic mode: the operator is provided with a suitable tracking device 12 so as to apply the marker 8 while detecting and storing the tracking and access vector containing all the required data. When applying the marker 8, the operator spatially moves the tracking device 12 which automatically detects and stores, instant by instant, the data needed to reconstruct the path to access the marker 8.

The tracking device 12 for applying the marker 8 while detecting and storing the tracking and access vector can be understood as a gun or an equivalent portable tool.

The tracking device 12 for applying the marker 8 while detecting and storing the tracking and access vector can be understood as a device consisting of two elements, a wearable one, such as a backpack, and a movable part connected to the wearable one mechanically or via radio.

The tracking device 12 for applying the marker 8 while detecting and storing the tracking and access vector can be understood as a device consisting of two elements, one applied to a base containing the tracking system, such as a platform on wheels, and an arm mechanically connected to the base.

The tracking device 12 for applying the marker 8 while detecting and storing the tracking and access vector can be understood as a device consisting of two elements, one applied to a base containing the tracking system, such as a platform on wheels, and a portable and/or wearable device connected via radio to the base.

Automatic mode: the operation is completely automatic and is carried out by a suitable tracking robot/device 12 capable of identifying the objectives, applying the marker 8, detecting and storing the tracking and access vector containing all the required data using a tracking system.

By way of example, a tracking system can be understood as a satellite tracking Global Position System (GPS). Various alternative tracking solutions are described in literature based on different principles: RTK GPS differential, UWB systems, cell phone networks, WIFI networks, with radio-frequency such as LORAN, ARVA... In any case, such known solutions are not the subject of this patent.

The end result of the first step A is a complete spatial representation of the targets or points of interest 6 and of the agricultural products 4, as well as of the related access paths. It is a table of coordinates and spatial directions identifying the single targets and the respective access path, the number of lines in the table corresponds to the number of markers 8 and agricultural products 4 present.

Regardless of the mode in which the first step is carried out, whether it is manual, semi-automatic, or automatic, it is a very time-consuming operation. This results in a high number of hours, of men if performed manually, of the device/robot if automatic. Generally, such times are incompatible with the need to harvest the product within a limited period of ripening, therefore it is convenient to perform it before.

The general planting table obtained in step A, or subsequent processings thereof, is used for programming a harvesting device 16.

By way of example, the harvesting device 16 could be a robotized arm provided with a system for searching the marker 8. The marker 8 could be a cylinder enveloping the stem which supports the fruit, and the color of the cylinder itself could be selected so as to be easily identified among the leaves. The robotized arm or harvesting device 16 is controlled by using the general table, to be positioned close to the marker or target 8. The target searching system could consist of 2 digital cameras to obtain a stereoscopic view of the marker 8, which are integral with the harvesting device 16.

Therefore, the optical searching system is positioned close to the marker 8 so that the marker 8 itself is inside the optical field without needing to carry out a search for it. The probability of this happening is linked to the width of the optical field and reliability of the information stored in the table. The greater the optical field, the greater the possibility to find it, but the greater the distance will be, and thus the time to reach the final position. The marker 8 could be at the edges and therefore the correction distance could be longer. The more recently the table was updated, the shorter the distance will be between the real position and the stored position. By processing the images, the system identifies the possible correction of the position and, if necessary, the reaching of the new position and thus the next harvesting operation. Various alternative solutions for tracking the target based on different principles are described in literature: optical, with radio-frequency, electro-magnetic...

The second (or last) step B consists in using the table detected and stored in step A, or a processing thereof, controlling the harvesting device 16 to quickly approach the points of interest 6 and, using the marker 8, reaching the target to carry out the required operation, e.g. the harvesting.

It is highly improbable that the target has moved by a significant amount from the initially stored position; the weight or external agents (wind, rain...) may have had an influence, thus modifying the final position of the target but within a limited area. The system for identifying the marker 8 compensates for this displacement, correcting the position previously detected in step A and obtaining the final one (XB, YB, ZB) . The other data contained in the tracking and access vector can also be corrected to improve the precision of the system.

By way of example, the flowering of crocus, from which saffron is obtained, takes place over a rather long period of time, 3 weeks, the ripening time is quite short, varying from 2 to 5 days, and the harvesting is concentrated into a rather limited period of time, 1 or 2 days. Therefore, the preparatory activities - step A, which require long times, can be carried out during the flowering and ripening, while the final harvesting activity - step B, can be accelerated due to the previously obtained information. The harvesting device already knows where to go to pick the flowers and knows the shortest path thereto.

Between the two temporally disjointed steps A and B, the system can perform a set of additional operations for processing the general planting table.

By processing the data contained in the general table, the optimal path is calculated, at a minimum time, for carrying out the harvesting step as quickly as possible.

By processing the data contained in the general table, the time for carrying out the step of harvesting, the production of the plantation, and the distribution thereof are calculated. Such information can be useful for planning the harvesting operation as a function of other parameters, weather conditions, level of ripeness, availability of equipment and personnel.

By way of example, further information from other sources can be added to the tracking and access vectors of the table; sensors, operators, other devices for managing the plantation (irrigation system, fertilization, quality control, weather...).

By way of example, a set of sample measurements can be carried out on the fruit in order to control the state of health (parasite presence), ripeness, and enter such information in the general table. The gathered information can be used for planning the subsequent activities and those of the years to come for optimizing future crops.

The general planting table can be used to carry out operations of controlling and managing the plantation prior to the step of harvesting, eliminating noncompliant products, thinning the leaves, measuring the state of ripeness of the product.

By way of example, the operation of defoliating a vineyard to ensure the correct exposure of the bunches to the sun rays in the last ripening step can be carried out using the information contained in the general planting table.

The general planting table can be used to perform a simulation of the final harvesting operation. The harvesting device 16 is programmed to carry out a simulation of the operation without harvesting the target (fruit or flower). Therefore, for each target, the device verifies the effective reaching and the deviation of the actual time from the theoretical one. The system calculates a parameter for each marker, which indicates the efficiency of reaching the marker.

By way of example, as a function of the value obtained for each marker 8, different action can be taken:
Parameter close to 100%: the simulation time is close to the theoretical one. The value of the tracking and access vector in the table is correct, no change
Parameter from 30% to 70%: the simulation time is significantly higher than the theoretical one. The value of the tracking and access vector in the table can be automatically updated with that detected during the simulation.

Parameter lower than 30%: the simulation time is much higher than the theoretical one or the marker 8 has not been reached. The operator is required to intervene to restore the optimal conditions. For example, the leaves may have grown, thus preventing identification of the marker and therefore it is necessary to clean the area around the target 4/marker 8. Or it could be that the marker has become detached and thus must be restored, carrying out the detection to update the related tracking and access vector, or the operator himself/herself may have eliminated some targets 4 because they do not meet the required quality requirements.

By way of example, the operator can use the harvesting device 16 itself in a learning mode, the operator guides the robotic arm to perform the required movement until reaching the desired point. Thereby, the system stores the path taken by the operator, and at the desired moment, for example during the harvesting, it will be able to repeat it with greater precision and efficiency.

By means of an iterative process of simulation, control and verification, the general planting table is updated from time to time so as to track the changes in the plantation conditions and ensure the highest efficiency of the final harvesting operation both in terms of time and amount of targets actually harvested with respect to those available.

At the end of such a process, the general planting table is used to program the harvesting device to carry out the final step of the process.

The method in hand describes how to generate and update a general planting table containing all the information needed to optimally carry out the harvesting step, i.e., minimize the times for identifying the markers 8 and harvesting the targets 4.

As can be appreciated from the above description, the present invention allows to overcome the drawbacks introduced in the prior art.

In particular, the method suggested by the present invention tends to distribute the various steps forming the process of identification and harvesting in compliance with the times of the natural developing process of the agricultural products.

In fact, the method suggests performing the preparatory activities during the period of growth and ripening, where the execution time is not critical, and reducing to a minimum, in terms of time, the final harvesting activities.

In order to meet specific, contingent needs, those skilled in the art may make several modifications and variations to the methods and devices described above, all contained within the scope of the invention as defined by the following claims.

## Claims

1. A method of identifying and harvesting agricultural products (4) comprising the steps of:
- identifying, as a target, at least one agricultural product (4),
- applying a marker (8) to each agricultural product,
- detecting and storing, for each marker, a set of data defining a tracking and access vector,
- said data forming the tracking and access vector comprises the absolute position of the marker and the data needed to construct a predefined path to access said marker,
- providing at least one harvesting device (16) for harvesting each agricultural product and programming it to reach each agricultural product based on the data contained in the tracking vector of each agricultural product,
**characterised in that** said data constituting the tracking and access vector comprise a versor identifying the orientation of the marker.

2. A method of identifying and harvesting agricultural products according to claim 1, wherein the step of establishing the optimal harvesting path for each agricultural product, based on the data contained in the tracking vector of each agricultural product, is included.

3. A method of identifying and harvesting agricultural products according to claim 1 or 2, wherein the step of establishing a general planting table for a plurality of agricultural products comprising, for each agricultural product, a corresponding tracking vector, and the step of establishing an optimal sequential harvesting path for said plurality of agricultural products are included.

4. A method of identifying and harvesting agricultural products according to claim 1, 2 or 3, comprising the step of establishing a general planting table for a plurality of agricultural products comprising, for each agricultural product, a corresponding tracking vector, and the step of processing said general planting table to calculate the time of harvesting, the production of agricultural products of the plantation, and the distribution of the production of agricultural products of the plantation.

5. A method of identifying and harvesting agricultural products according to any one of the claims from 1 to 4, comprising the step of establishing a general planting table for a plurality of agricultural products comprising, for each agricultural product, a corresponding tracking vector, and the step of supplementing said general planting table with data from other plantation management and control devices.

6. A method of identifying and harvesting agricultural products according to any one of the claims from 1 to 5, comprising the step of establishing a general planting table for a plurality of agricultural products comprising, for each agricultural product, a corresponding tracking vector, using said general planting table to plan and carry out plantation control and management operations prior to the harvesting step.

7. A method of identifying and harvesting agricultural products according to any one of the claims from 1 to 6, comprising the step of establishing a general planting table for a plurality of agricultural products comprising, for each agricultural product, a corresponding tracking vector, using said general planting table by the harvesting device to perform a simulation of the harvesting operation and determine a parameter for each marker, which indicates the efficiency of reaching the marker itself.

8. A method of identifying and harvesting agricultural products according to claim 7, wherein following the simulation result, the general planting table is automatically updated.

9. A method of identifying and harvesting agricultural products according to claim 7, wherein following the simulation result, an update of some tracking and access vectors of the general planting table is required by the operator, or, following the simulation result, an intervention on the plantation is required to restore the conditions for reaching the markers.

## Patentansprüche

1. Verfahren zum Identifizieren und Ernten von landwirtschaftlichen Produkten, umfassend die Schritte des:
- Identifizierens mindestens eines landwirtschaftlichen Produkts (4) als Ziel
- Aufbringens einer Markierung (8) auf jedes landwirtschaftliche Produkt,
- Detektierens und Speicherns eines Datensatzes für jede Markierung, der einen Verfolgungs- und Zugriffsvektor definiert,
- wobei die Daten, die den Verfolgungs- und Zugriffsvektor bilden, die absolute Position der Markierung und die Daten umfassen, die erforderlich sind, um einen vordefinierten Weg zum Zugriff auf die Markierung zu konstruieren,
- Bereitstellens mindestens einer Erntevorrichtung (16) zum Ernten jedes landwirtschaftlichen Produkts und Programmierens derselben, um jedes landwirtschaftliche Produkt zu erreichen, basierend auf den in dem Verfolgungsvektor jedes landwirtschaftlichen Produkts enthaltenen Daten,
**dadurch gekennzeichnet, dass** die Daten, die den Verfolgungs- und Zugriffsvektor bilden, einen Versor umfassen, der die Ausrichtung der Markierung identifiziert.

2. Verfahren zum Identifizieren und Ernten von landwirtschaftlichen Produkten nach Anspruch 1, wobei der Schritt des Erstellens des optimalen Erntewegs für jedes landwirtschaftliche Produkt basierend auf den in dem Verfolgungsvektor jedes landwirtschaftlichen Produkts enthaltenen Daten enthalten ist.

3. Verfahren zum Identifizieren und Ernten von landwirtschaftlichen Produkten nach Anspruch 1 oder 2, wobei der Schritt des Erstellens einer allgemeinen Pflanztabelle für eine Vielzahl von landwirtschaftlichen Produkten, die für jedes landwirtschaftliche Produkt einen entsprechenden Verfolgungsvektor aufweist, und der Schritt des Erstellens eines optimalen sequenziellen Erntewegs für die Vielzahl von landwirtschaftlichen Produkten enthalten sind.

4. Verfahren zum Identifizieren und Ernten von landwirtschaftlichen Produkten nach Anspruch 1, 2 oder 3, umfassend den Schritt des Erstellens einer allgemeinen Pflanztabelle für eine Vielzahl von landwirtschaftlichen Produkten, die für jedes landwirtschaftliche Produkt einen entsprechenden Verfolgungsvektor aufweist, und den Schritt des Verarbeitens der allgemeinen Pflanztabelle, um die Erntezeit, die Produktion von landwirtschaftlichen Produkten der Plantage und die Verteilung der Produktion von landwirtschaftlichen Produkten der Plantage zu berechnen.

5. Verfahren zum Identifizieren und Ernten von landwirtschaftlichen Produkten nach einem der Ansprüche 1 bis 4, umfassend den Schritt des Erstellens einer allgemeinen Pflanztabelle für eine Vielzahl von landwirtschaftlichen Produkten, die für jedes landwirtschaftliche Produkt einen entsprechenden Verfolgungsvektor aufweist, und den Schritt des Ergänzens der allgemeinen Pflanztabelle mit Daten von anderen Plantagenverwaltungs- und -steuervorrichtungen.

6. Verfahren zum Identifizieren und Ernten von landwirtschaftlichen Produkten nach einem der Ansprüche 1 bis 5, umfassend den Schritt des Erstellens einer allgemeinen Pflanztabelle für eine Vielzahl von landwirtschaftlichen Produkten, die für jedes landwirtschaftliche Produkt einen entsprechenden Verfolgungsvektor aufweist, wobei die allgemeine Pflanztabelle verwendet wird, um Plantagensteuer- und - verwaltungsvorgänge vor dem Ernteschritt zu planen und auszuführen.

7. Verfahren zum Identifizieren und Ernten von landwirtschaftlichen Produkten nach einem der Ansprüche 1 bis 6, umfassend den Schritt des Erstellens einer allgemeinen Pflanztabelle für eine Vielzahl von landwirtschaftlichen Produkten, die für jedes landwirtschaftliche Produkt einen entsprechenden Verfolgungsvektor aufweist, wobei die allgemeine Pflanztabelle durch die Erntevorrichtung verwendet wird, um eine Simulation des Erntevorgangs durchzuführen und einen Parameter für jede Markierung zu bestimmen, der die Effizienz des Erreichens der Markierung selbst angibt.

8. Verfahren zum Identifizieren und Ernten von landwirtschaftlichen Produkten nach Anspruch 7, wobei nach dem Simulationsergebnis die allgemeine Pflanztabelle automatisch aktualisiert wird.

9. Verfahren zum Identifizieren und Ernten von landwirtschaftlichen Produkten nach Anspruch 7, wobei nach dem Simulationsergebnis eine Aktualisierung einiger Verfolgungs- und Zugriffsvektoren der allgemeinen Pflanztabelle durch den Bediener erforderlich ist oder nach dem Simulationsergebnis ein Eingriff in die Plantage erforderlich ist, um die Bedingungen zum Erreichen der Markierungen wiederherzustellen.

## Revendications

1. Procédé pour identifier et collecter des produits agricoles (4) comprenant les étapes suivantes :
- identifier, comme cible, au moins un produit agricole (4),
- appliquer un marqueur (8) sur chaque produit agricole,
- détecter et stocker, pour chaque marqueur, un ensemble de données définissant un vecteur de suivi et d'accès,
- lesdites données formant le vecteur de suivi et d'accès comprennent la position absolue du marqueur et les données nécessaires pour créer un chemin prédéfini pour accéder audit marqueur,
- fournir au moins un dispositif de collecte (16) pour collecter chaque produit agricole et le programmer pour atteindre chaque produit agricole en fonction des données contenues dans le vecteur de suivi de chaque produit agricole,
**caractérisé en ce que** lesdites données constituant le vecteur de suivi et d'accès comprennent un verseur identifiant l'orientation du marqueur.

2. Procédé pour identifier et collecter des produits agricoles selon la revendication 1, dans lequel l'étape d'établissement du chemin optimal de collecte pour chaque produit agricole, en fonction des données contenues dans le vecteur de suivi de chaque produit agricole, est comprise.

3. Procédé pour identifier et collecter des produits agricoles selon la revendication 1 ou 2, dans lequel l'étape d'établissement d'une table générale de plantation pour une pluralité de produits agricoles comprenant, pour chaque produit agricole, un vecteur de suivi correspondant, et l'étape d'établissement d'un chemin optimal de collecte séquentielle pour ladite pluralité de produits agricoles sont comprises.

4. Procédé pour identifier et collecter des produits agricoles selon la revendication 1, 2 ou 3, comprenant l'étape consistant à établir une table générale de plantation pour une pluralité de produits agricoles comprenant, pour chaque produit agricole, un vecteur de suivi correspondant, et l'étape de traitement de ladite table générale de plantation pour calculer le temps de collecte, la production des produits agricoles de la plantation et la distribution de la production des produits agricoles de la plantation.

5. Procédé pour identifier et collecter des produits agricoles selon l'une quelconque des revendications 1 à 4, comprenant l'étape d'établissement d'une table générale de plantation pour une pluralité de produits agricoles comprenant, pour chaque produit agricole, un vecteur de suivi correspondant, et l'étape de supplément de ladite table générale de plantation par des données provenant d'autres dispositifs de commande et de gestion de plantation.

6. Procédé pour identifier et collecter des produits agricoles selon l'une quelconque des revendications 1 à 5, comprenant l'étape d'établissement d'une table générale de plantation pour une pluralité de produits agricoles comprenant, pour chaque produit agricole, un vecteur de suivi correspondant, utilisant ladite table générale de plantation pour planifier et réaliser des opérations de commande et de gestion de plantation avant l'étape de collecte.

7. Procédé pour identifier et collecter des produits agricoles selon l'une quelconque des revendications 1 à 6, comprenant l'étape d'établissement d'une table générale de plantation pour une pluralité de produits agricoles comprenant, pour chaque produit agricole, un vecteur de suivi correspondant, utilisant ladite table générale de plantation par le dispositif de collecte pour effectuer une simulation de l'opération de collecte et déterminer un paramètre pour chaque marqueur, qui indique l'efficacité pour atteindre le marqueur lui-même.

8. Procédé pour identifier et collecter des produits agricoles selon la revendication 7, dans lequel, à la suite du résultat de la simulation, la table générale de plantation est automatiquement mise à jour.

9. Procédé pour identifier et collecter des produits agricoles selon la revendication 7, dans lequel, à la suite du résultat de la simulation, une mise à jour de certains vecteurs de suivi et d'accès de la table générale de plantation est requise de la part de l'opérateur, ou, à la suite du résultat de la simulation, une intervention sur la plantation est nécessaire pour rétablir les conditions d'atteinte des marqueurs.
